# EUROPEAN PATENT APPLICATION

(11) **EP 1 736 718 A1**
(43) Date of publication of application: **27.12.2006**
(21) Application number: 05405392.1
(22) Date of filing: 20.06.2005
(51) Int. Cl.: F25B 21/00

(54) **Magnetic refrigerator and/or heat pump using magneto-caloric fluid and process for magnetic heating and/or cooling with such a refrigerator and/or heat pump**

(71) Applicant: Haute Ecole d'Ingénieurs et de Gestion du Canton, 1400 Yverdon-les-Bains (CH)
(72) Inventor: Kitanovski, Andrej, 1000 Ljublijana (SI); Sari, Osmann, 1009 Pully (CH); Gendre, Fabrice, 1054 Morrens (CH); Egolf, Peter Williams, 5702 Niederlenz (CH); Derrick, Ata-Caesar, 1007 Lausanne (CH)
(74) Representative: Nithardt, Roland

(57) **Abstract**

The present invention concerns a magnetic refrigerator and/or a heat pump using a magnetocaloric fluid as refrigerant having an efficiency which is large enough for home and industrial applications such as industrial thermal processes, refrigerator manufacturing, automobile, train and aircraft industries. This magnetic refrigerator and/or heat pump (10) comprises one hot circuit (11) and one cold circuit (12) for transporting a magnetocaloric fluid (11a and 12a): The hot circuit (11) includes means (13) for generating a magnetic field and comprises one magnet, a hot heat exchanger (11b) and a first pump (11c). The cold circuit (12) includes a cold heat exchanger (12b) and a second pump (12c), and the hot circuit (11) includes a first mixing element (11d) and a first carrier fluid particle separator (11e). The cold circuit (12) includes a second mixing element (12d) and a second carrier fluid particle separator (12e), the first mixing element (11d) of the hot circuit (11) being connected to the second carrier fluid particle separator (12e) of the cold circuit (12) through a first transport conduit (14a) for particles, and the first carrier fluid particle separator (11e) of the hot circuit (11) being connected to the second mixing element (12d) of the cold circuit (12) through a second transport conduit (15a) for particles.

## Description

### Technical Field

The present invention relates to a magnetic refrigerator and/or a heat pump using a magnetocaloric fluid as refrigerant comprising at least one first circuit called hot circuit and at least one second circuit called cold circuit for transporting a magnetocaloric fluid, the said hot circuit including means for generating a magnetic field and comprise at least one magnet, a hot heat exchanger and a first pump, and the said cold circuit including a cold heat exchanger and a second pump.

The present invention also concerns a process for magnetic heating and/or cooling by means of a magnetic refrigerator and/or a heat pump using a magneto caloric fluid as refrigerant, comprising at least one first circuit called hot circuit and at least one second circuit called cold circuit for transporting a magnetocaloric fluid, the said hot circuit including means for generating a magnetic field which comprise at least one magnet a hot heat exchanger and a first pump, and the said cold circuit including a cold heat exchanger and a second pump.

### Background Art

The refrigerants usually used in conventional cooling technologies, i.e. the CFC's and HCFC's, are having serious adverse effects on the global environment. In spite of the proven efficiencies and invaluable experiences gained over decades with these refrigerants, humanity is confronted with the inevitable necessity to phase them out and to search for alternatives. Many different solutions are currently being proposed, but most of them constitute the replacement of existing refrigerants with new ones. Only few approach the issue by replacing existing conventional cooling technologies.

The technology of magnetic refrigeration at room temperature is gaining remarkable interest. Many new magnetocaloric materials which serve as solid refrigerants in magnetic refrigeration systems, were invented, and numerous different devices have been developed. Today some of these systems are capable of operating near room temperatures, thus presenting alternatives to conventional cooling technologies. There has also been a tendency to develop permanent magnets with very strong magnetic fields. These preconditions call for the gradual introduction of this technology into the future refrigeration market. Several improvements of existing magnetic refrigeration devices are still necessary and new magnetocaloric materials, which will exhibit a much higher magnetocaloric effect than at present, are to be developed.

Most of existing magnetic refrigerators are based on the rotational or reciprocate motion of a magnetocaloric material. Some of them are also related to the use of a magnetocaloric fluid, where solid magnetocaloric particles are carried with a carrier fluid through the circuit. However, the magnetocaloric materials have quite low specific heat capacity when compared to a carrier fluid, such as water. Therefore, the temperature difference between heat source and heat sink would be rather low in a single stage device.

To overcome the above drawbacks of the prior art devices, an object of the present invention is to provide a magnetic refrigerator and/or a heat pump using a magnetocaloric fluid as refrigerant having an efficiency which is large enough for home and industrial applications such as industrial thermal processes, refrigerator manufacturing, automobile, train and aircraft industries.

The magnetic refrigerator and/or a heat pump using a magnetocaloric fluid as refrigerant of the present invention is characterized in that the said hot circuit includes a first mixing element and a first carrier fluid particle separator and the said cold circuit includes a second mixing element and a second carrier fluid particle separator, the first mixing element of the hot circuit being connected to the second carrier fluid particle separator of the cold circuit through a first transport conduit for particles, and the first carrier fluid particle separator of the hot circuit being connected to the second mixing element of the cold circuit through a second transport conduit for particles.

The magnetocaloric materials may be made of any kind of magnetocaloric materials. The minimum number of magnetocaloric materials is one. The size of magnetocaloric particles should be large enough, that it enables easy separation of them from the carrier fluid. The carrier fluid may be any kind of gas, liquid, suspension or a nanofluid.

The said first transport conduit for particles includes a first transport element and the said second transport conduit for particles includes preferably a second transport element. The said transport elements are pumps or gravitational forces, systems based on electrodynamics, magnetohydrodynamics or magneto-mechanical systems. To increase the efficiency of the device it comprises a regeneration assembly which interconnects the said first circuit called hot circuit and a second circuit called cold circuit. The said regeneration assembly comprises preferably at least a mixing element, a pumping device and a carrier fluid particle separator. The said mixing element of the regeneration device is preferably connected to the carrier fluid particle separator through the pumping device. The regeneration assembly may further comprise at least one transport element for particles.

According to another embodiment of the invention, the magnetic refrigerator and/or a heat pump comprises at least two stages designed as a cascade system comprising a first device and a second device comprising each a first circuit called hot circuit and a second circuit called cold circuit for transporting a magnetocaloric fluid, both devices being connected by a conduit comprising a pumping member.

Another object of the invention is to define a process for cooling and/or heating by means of a magnetic refrigerator and/or a heat pump using a magnetocaloric fluid as refrigerant, as disclosed above, characterized in that the magnetocaloric particles of the magnetocaloric fluid are mixed in a first mixing element and separated from the carrier fluid in a first carrier fluid particle separator in the said hot circuit, in that the magnetocaloric particles of the magnetocaloric fluid are mixed in a second mixing element and are separated from the carrier fluid in a second carrier fluid particle separator in the said cold circuit and in that both the cold circuit and the hot circuit are connected through a first transport conduit for particles, and a second transport conduit for particles.

The magnetocaloric fluid is preferably submitted to a regeneration process.

### Brief Description of the Drawings

Figure 1 is a schematic view of a first embodiment of a magnetic refrigerator with separation of magnetocaloric particles according to the invention,
Figure 2 is a schematic view of a second embodiment of a magnetic refrigerator with separation of magnetocaloric particles and using active regeneration of heat according to the invention,
Figure 3 is a schematic view of a third embodiment of the single stage magnetic refrigerator with separation of magnetocaloric particles without regeneration according to the invention,
Figure 4 is a top view of the third embodiment of a single stage magnetic refrigerator with separation of magnetocaloric particles without regeneration of Figure 3
Figure 5 is a schematic view of a fourth embodiment of a magnetic refrigerator with separation of magnetocaloric particles and intermediate regeneration according to the invention, and
Figures 6 and 7 are schematic views of a two stage cascade system.

### Best mode for carrying out the Invention

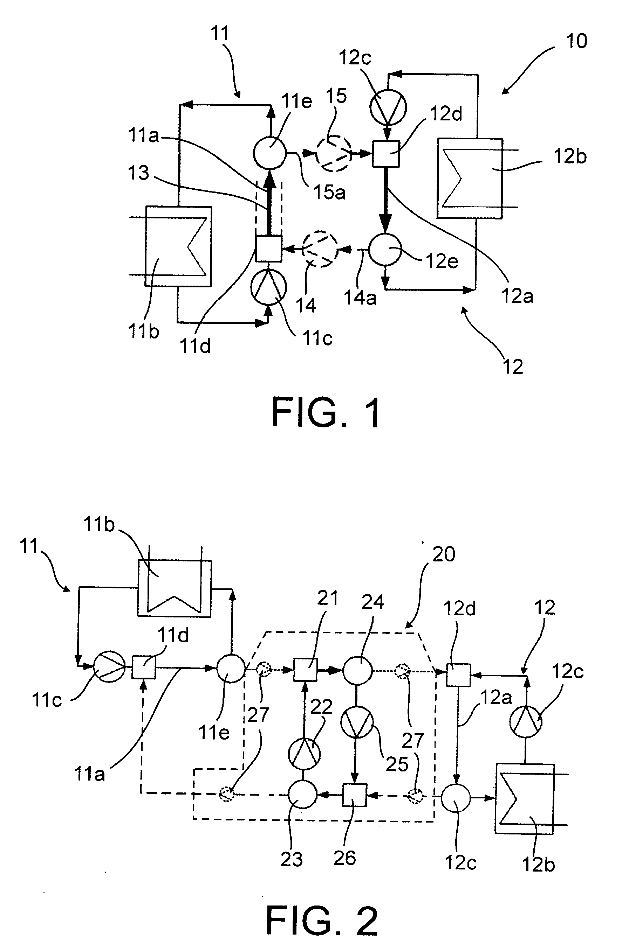

Figure 1 shows a basic schematic design of the magnetic refrigerator, which is based on the transport of at least one magnetocaloric fluid through a magnetic field, and where magnetocaloric particles are separated from a carrier fluid at least at one location in the device. According to the Figure 1, the magnetic refrigerator 10 of the invention comprises a first circuit called hot circuit 11 and a second circuit called cold circuit 12 for transporting a magnetocaloric fluid respectively represented in each circuit by the arrows 11a and 12a. The hot circuit 11 comprises means 13 for generating a magnetic field. These means 13 may comprise at least one permanent magnet or any other kind of magnets. The hot circuit 11 includes a hot heat exchanger 11b, a first pump 11c, a first mixing element 11d and a first carrier fluid particle separator 11e. The cold circuit 12 includes a cold heat exchanger 12b, a second pump 12c, a second mixing element 12d and a second carrier fluid particle separator 12e. The first mixing element 11d of the hot circuit 11 is connected to the second carrier fluid particle separator 12e of the cold circuit 12, through a first transport conduit for particles 14a, and eventually through a transport element such as a pump 14 and the first carrier fluid particle separator 11e of the hot circuit 11 is connected to the second mixing element 12d of the cold circuit 12 through a second transport conduit 15a for particles, and eventually a second transport element 15 such as a pump.

The warm carrier fluid, flowing from the hot heat exchanger 11b is pumped by the first pump 11c into the first mixing element 11d, where it is mixed with the magnetocaloric particles that it contains. The first mixing element 11d may be inside or outside the magnetic field generated by the magnetic means 13 comprising preferably at least one permanent magnet. The carrier fluid together with the magnetocaloric particles forms a suspension, which flows through the magnetic field. Similarly, the cold carrier fluid, flowing from the cold heat exchanger 12b is pumped by the second pump 12c into the second mixing element 12d, where it is mixed with the magnetocaloric particles that it contains. When magnetocaloric particles of the magnetocaloric fluid of the first circuit 11 enter the magnetic field, their temperature will increase (or decrease, if they include antiferromagnetic materials) and consequently the temperature of the carrier fluid will increase. In the magnetic field or in special cases outside of the magnetic field, the magnetocaloric particles are separated from the carrier fluid, using the first fluid particle separator 11e. Warmer carrier fluid represented by arrow 11a flows further to the first hot heat exchanger 11b in order to reject heat out of the hot circuit 11. The magnetocaloric particles are transported through a conduit 15a by a special transport element 15, such as a pump or by gravitational forces or other means to the second mixing element 12d of the cold circuit 12, where cold carrier fluid is pumped by the second pump 12c from the cold heat exchanger 12b to the second mixing element 12d. In the mixing element 12d it is mixed with cold magnetocaloric particles. The temperature of magnetocaloric particles, when leaving the magnetic field (after the separation in the first carrier fluid particle separator 11) decreases. When they are mixing with the cold carrier fluid, the temperature of magnetocaloric particles will increase and the temperature of the cold carrier fluid will decrease.

The magnetocaloric particles and the carrier fluid form a suspension, which then flows into the second carrier fluid particle separator 12e of the cold circuit 12, where particles are separated from the cold carrier fluid. The magnetocaloric particles then are transported through the conduit 14a which includes a particles transporting element such as a pump 14 in order to be mixed in the first mixing element 11d with the warm carrier fluid, while the cold carrier fluid flows into the cold heat exchanger 12b. The magnetic field may be formed by any kind of magnets, but preferably permanent magnets. The magnetic field may be an alternating or a uniform one. The minimum number of magnets is one. The configuration of the idea in this embodiment of the invention enables also the use of Halbach type of magnets.

The transport of the magnetocaloric particles from a fluid particle separator to a mixing element may be enabled with the help of gravitational force or by other means such as electrohydrodynamics (EHD), magnetohydrodynamics (MHD) or the use of a magneto-mechanical system, e.g. transport with magnetic belt-drives, or others.

The device represented by Figure 1 shows a single stage device, without regeneration. By regeneration, higher temperature difference between heat source and heat sink is possible. The regeneration may be performed in the sense, that some of the heat from the part of then device in magnetic field is brought to the part of the device outside the magnetic field and vice-versa. Regeneration in the case of Figure 1 will require a modification of the disclosed device.

Two different regenerative processes are possible:
a) passive regeneration, where some of the heat from the part of the device in the magnetic field is transferred to the part of the device outside the magnetic field by different kinds of regeneration fluids flowing in a closed circuit,
b) active regeneration, where a certain amount of the carrier fluid from the part of the device in the magnetic field is pumped into the part of the device outside the magnetic field and vice-versa.

Figure 2 shows a solution of a magnetic refrigerator using active regeneration of heat. The main components of the device shown by Figure 2 which are similar to components of the device represented by Figure 1 and have the same function, are designated by the same reference numbers. According to the Figure 2, the device comprises a first hot circuit 11 and a second cold circuit 12. The warm carrier fluid circulates through the first circuit called hot circuit 11 comprising the hot heat exchanger 11b where heat is rejected out of the system, the first pump 11c and, in some cases, the first mixing element 11d, where the warm carrier fluid is mixed with magnetocaloric particles. This first mixing element 11d or a section thereof may be placed at least partially inside the magnetic field generated by magnetic means 13. Upon mixing, the warm carrier fluid cools down while the magnetocaloric particles heat up. Together, they form a magnetocaloric fluid flowing through the hot circuit 11. When they enter the magnetic field, the magnetocaloric particles heat up partly and this heat is partly transferred to the carrier fluid. The magnetocaloric fluid enters the fluid particle separator 11e or enters a region, where particles are separated from the carrier fluid of the first circuit called hot circuit 11 fluid. Some of the warm carrier fluid flows from the particle separator 11e to the hot heat exchanger 11b, where it rejects heat out of the system.

The magnetocaloric particles leave the magnetic field after separator 11e, and are therefore cooled. The device comprises an active heat regeneration assembly 20 to which the magnetocaloric particles are transported from the fluid particle separator 11e and mixed in a mixing element 21 with the fluid brought from the second circuit called cold circuit 12, by a pumping device 22 connected to a carrier fluid particle separator 23. In the mixing element 21, the temperature of the magnetocaloric particles decreases, while the temperature of the carrier fluid increases. After this process, the carrier fluid is again separated in a further carrier fluid particle separator 24 from the magnetocaloric particles and then it is pumped, by a pumping device 25 connected to a mixing element 26, to the "cold" part of the device in order to bring heat to it. The magnetocaloric particles are transported from the fluid particle separator 24 to the mixing element 12d where they mix with the cold carrier fluid, flowing from the cold heat exchanger 12b. The mixing of the magnetocaloric particles with the cold magnetocaloric fluid may be performed also inside magnetic field, before the magnetocaloric particles leave the magnetic field. Upon mixing with the magnetocaloric particles, the cold carrier fluid cools and flows back to the cold heat exchanger 12b, after separation in the fluid particle separator 12c from the magnetic particles which continue their flow to said mixing element 26 in order to mix with the carrier fluid from the "warm" part of device, the hot circuit 11.

The regeneration assembly 20 comprises at least the mixing element 21, the pumping device 22, the carrier fluid particle separator 23, the carrier fluid particle separator 24, the pumping device 25 and the mixing element 26. The mixing element 21 is connected to the carrier fluid particle separator 23 through the pumping device 22, and the carrier fluid particle separator 24 is connected to the mixing element 26 through the pumping device 25. The regeneration assembly 20 may moreover comprise at least one and preferably four transport elements for particles 27 or a mixture of particles with carrier fluid in case of active regeneration.

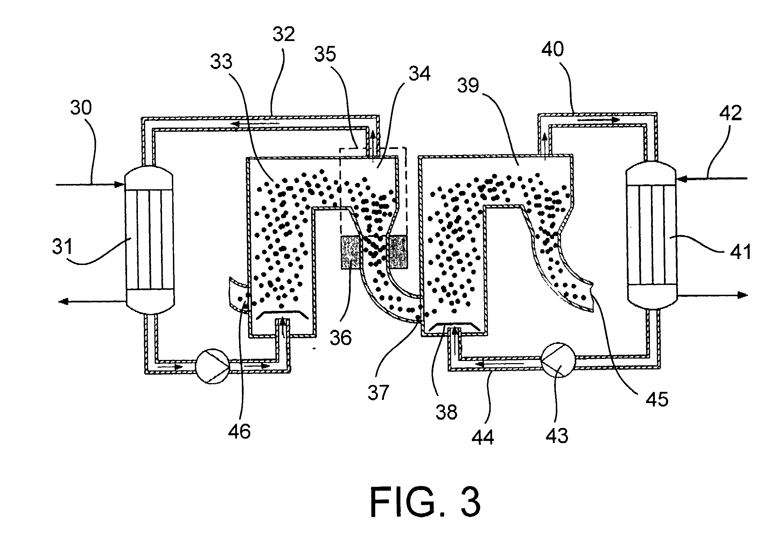

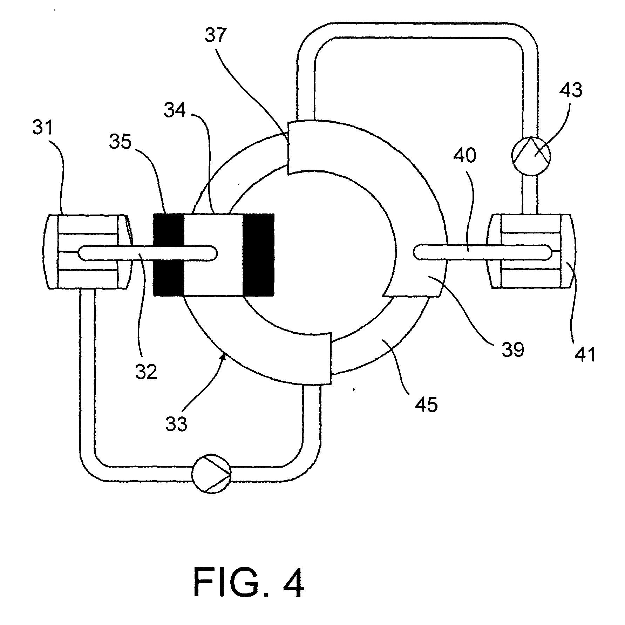

Figures 3 and 4 show an example of a single stage magnetic refrigerator without regeneration. The external heat sink fluid 30 flows into the hot heat exchanger 31 and extracts heat out of the system. In a special case, the external heat sink fluid may not be needed. For example, the warm carrier fluid may directly enter a cooling tower, and then circulate back to the system. Another example is the use of the heat sink fluid directly as the warm carrier fluid, for instance in big systems, water from river. On the secondary side of the hot heat exchanger 31, the warm carrier fluid is brought by the help of a conduit 32. In a part denoted by reference number 34, the warm carrier fluid is extracted from its mixture 33 with of magnetocaloric particles. The separation of particles from the warm carrier fluid should preferably occur in the magnetic field. The magnetic field is induced by at least one magnet 35, which may be any kind of magnet which may have different shapes. If possible, by the configuration of the system, a Lorentz force may be applied to the particles in the magnetic field in order to help their evacuation out of the magnetic field. If this is not possible, and gravitational force is not sufficient for evacuating the particles out of the magnetic field, an element may be placed inside or near the outlet of the magnetic field to transport the magnetocaloric particles out of it, for example in part 36. The magnetocaloric particles leave the magnetic field and are therefore cooled down. They flow with a very small amount of the warm carrier fluid flow through the section 37 and subsequently mixed with the cold carrier fluid. In order to prevent particle deposition and induce effective mixing with the carrier fluid, a flow e.g. upwards, a special rotating element 38 or a similar method should preferably be used for the distribution of the cold carrier fluid. Upon mixing, the magnetocaloric particles are warmed by the cold carrier fluid, and the cold carrier fluid is cooled down. The mixture flows into the section 39 where the cold carrier fluid is separated from the magnetocaloric particles. The cold carrier fluid flows through the conduit 40 into the cold heat exchanger 41, where the heat is brought to the device by an external fluid 42 or other means. In the cold heat exchanger, the cold carrier fluid is heated by the heat source and flows by the help of a transport element 43 and through the conduit 44 to a special fluid distribution element 38 in order to be mixed with magnetocaloric particles. The magnetocaloric particles after their separation in section 39 from the carrier fluid, flow with a small portion of the cold carrier fluid through the section 45 to join the section 46. The whole device could be formed to a kind of circular layout (see Figure 4).

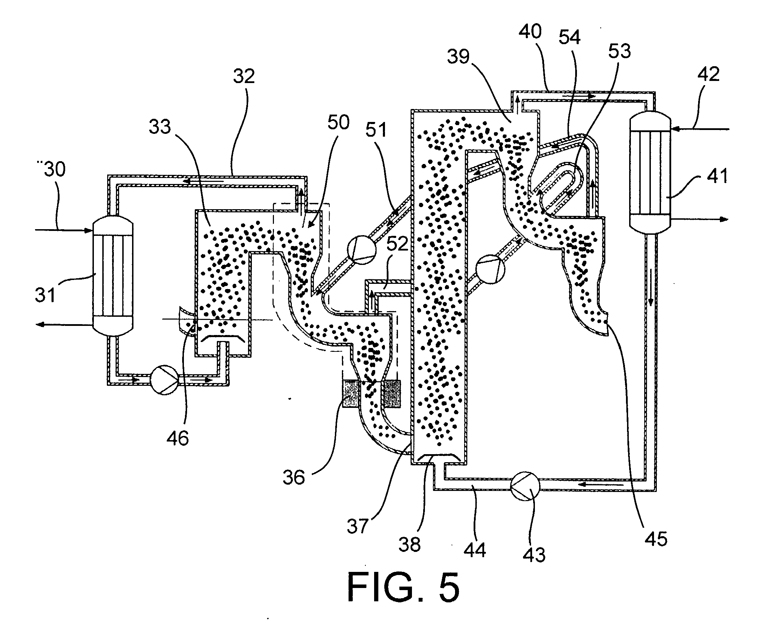

An example of a regenerative process is shown in Figure 5. The components which are similar to those of Figure 3 are designated by the same reference numbers. According to Figure 5, after the separation in part 50 of warm carrier fluid from the magnetocaloric particles, the magnetocaloric particles are mixed with fluid injected through the supply conduit 51 in order to perform a regenerative process. In this process, the magnetocaloric particles are cooled while the fluid is warmed up. Subsequently, the warmed fluid 52 is separated from the magnetocaloric particles and pumped through conduit 53 to the cold part of the device, where it is mixed with magnetocaloric particles and warms them up. This fluid is separated from the particles and pumped back to the warm part of the device through a conduit 54. By a regenerative process, the difference between heat source and heat sink may be increased.

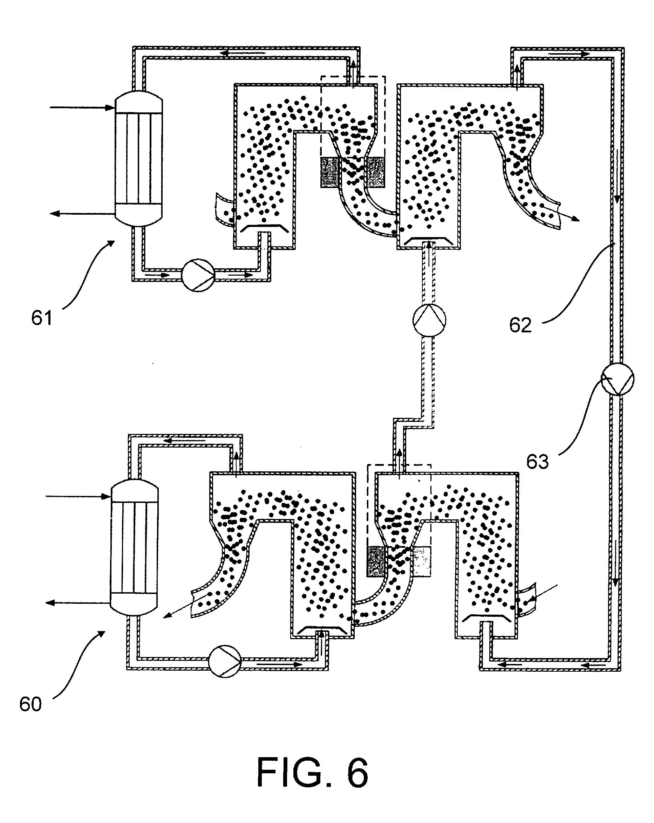

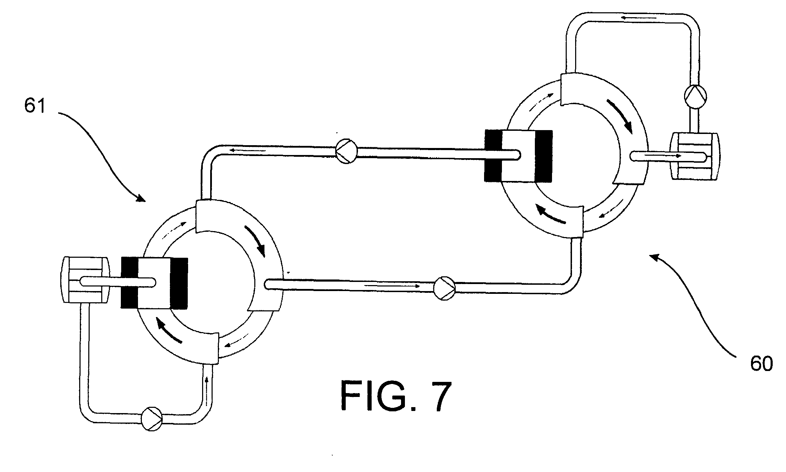

Another example of how to increase the temperature difference between the heat source and the heat sink is to make a cascade system, where the cooling energy of a first device is used to reject heat from a second device and so on. An example of such a system is shown in Figures 6 and 7, where a two stage cascade system is presented. This two stage cascade system comprises a first device 60 and a second device 61 which are connected by a conduit 62 comprising a pumping device 63. The first device 60 and the second device 61 are similar to the single stage magnetic refrigerator without regeneration represented by Figures 3 and 4.

There are two ways of making such a system. One is an indirect connection by use of additional heat exchangers and fluids of the cold part of the first stage to the warm part of the second stage. Another solution is direct connection, where the cold carrier fluid from the first stage flows into the warm part of the second stage and after the separation from the magnetocaloric particles, flows back again to the cold part of the first stage. This last solution is represented in Figure 6.

## Claims

1. Magnetic refrigerator and/or a heat pump using a magnetocaloric fluid as refrigerant, comprising at least one first circuit called hot circuit (11) and at least one second circuit called cold circuit (12) for transporting a magnetocaloric fluid (11a and 12a), the said hot circuit (11) including means (13) for generating a magnetic field and comprise at least one magnet, a hot heat exchanger (11b) and a first pump (11c), and the said cold circuit (12) including a cold heat exchanger (12b) and a second pump (12c), **characterized in that** the said hot circuit (11) includes a first mixing element (11d) and a first carrier fluid particle separator (11e) and the said cold circuit (12) includes a second mixing element (12d) and a second carrier fluid particle separator (12e), the first mixing element (11d) of the hot circuit (11) being connected to the second carrier fluid particle separator (12e) of the cold circuit (12) through a first transport conduit (14a) for particles, and the first carrier fluid particle separator (11e) of the hot circuit (11) being connected to the second mixing element (12d) of the cold circuit (12) through a second transport conduit (15a) for particles.

2. Magnetic refrigerator and/or a heat pump according to claim 1, **characterized in that** the said first transport conduit (14a) for particles includes a first transport element (14) and the said second transport conduit (15a) for particles includes a second transport element (15).

3. Magnetic refrigerator and/or a heat pump according to claim 2, **characterized in that** the said transport elements (14 and 15) are pumps or gravitational forces, systems based on electrodynamics, magnetohydrodynamics or magneto-mechanical systems.

4. Magnetic refrigerator and/or a heat pump according to claim 1, **characterized in that** it comprises a regeneration assembly (20) which interconnects the said first circuit called hot circuit (11) and a second circuit called cold circuit (12).

5. Magnetic refrigerator and/or a heat pump according to claim 4, **characterized in that** the regeneration assembly (20) comprises at least a mixing element (21), a pumping device (22), a carrier fluid particle separator (23), a carrier fluid particle separator (24), a pumping device (25) and the mixing element (26).

6. Magnetic refrigerator and/or a heat pump according to claim 5, **characterized in that** the mixing element (21) is connected to the carrier fluid particle separator (23) through the pumping device (22), and the carrier fluid particle separator (24) is connected to the mixing element (26) through the pumping device (25).

7. Magnetic refrigerator and/or a heat pump according to claim 5, **characterized in that** the regeneration assembly (20) further may comprise at least one transport element for particles (27).

8. Magnetic refrigerator and/or a heat pump according to claim 5, **characterized in that** it comprises at least two stages designed as a cascade system comprising a first device (60) and a second device (61) comprising each a first circuit called hot circuit (11) and a second circuit called cold circuit (12) for transporting a magnetocaloric fluid, both devices (60, 61) being connected by a conduit (62) comprising a pumping member (63).

9. Process for cooling and/or heating by means of a magnetic refrigerator and/or a heat pump using a magnetocaloric fluid as refrigerant, comprising at least one first circuit called hot circuit (11) and at least one second circuit called cold circuit (12) for transporting a magnetocaloric fluid (11a and 12a), the said hot circuit (11) including some means (13) for generating a magnetic field and comprising at least one magnet, a hot heat exchanger (11b) and a first pump (11c), and the said cold circuit (12) including a cold heat exchanger (12b) and a second pump (12c), **characterized in that** the magnetocaloric particles of the magnetocaloric fluid are mixed in a first mixing element (11d) and separated from the carrier fluid in a first carrier fluid particle separator (11e) in the said hot circuit (11), **in that** the magnetocaloric particles of the magnetocaloric fluid are mixed in a second mixing element (12d) and are separated from the carrier fluid in a second carrier fluid particle separator (12e) in the said cold circuit (12) and **in that** both the cold circuit (12) and the hot circuit (11) are connected through a first transport conduit (14a) for particles, and a second transport conduit (15a) for particles.

10. Process for cooling and/or heating according to claim 1, **characterized in that** the magnetocaloric fluid is submitted to a regeneration process.
